(19) Europäisches Patentamt
European Patent Office
Office européen des brevets

(11) EP 2 737 308 B1

(12) # FASCICULE DE BREVET EUROPEEN

(45) Date de publication et mention de la délivrance du brevet:
**14.09.2016 Bulletin 2016/37**

(21) Numéro de dépôt: **12740946.4**

(22) Date de dépôt: **25.07.2012**

(51) Int Cl.:
***G01N 27/49*** (2006.01) ***G01N 33/18*** (2006.01)

(86) Numéro de dépôt international:
**PCT/EP2012/064601**

(87) Numéro de publication internationale:
**WO 2013/014187 (31.01.2013 Gazette 2013/05)**

(54) **DISPOSITIF POUR LA MESURE DE LA TENEUR EN CHLORE LIBRE D'UNE EAU**

VORRICHTUNG ZUM MESSEN DES FREIEN CHLORIDGEHALTS VON WASSER

DEVICE FOR MEASURING THE FREE CHLORIDE CONTENT OF WATER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.07.2011 FR 1156775**

(43) Date de publication de la demande:
**04.06.2014 Bulletin 2014/23**

(73) Titulaire: **Veolia Water Solutions & Technologies Support**
**94417 Saint-Maurice Cedex (FR)**

(72) Inventeurs:
- **BERIET, Carine**
  **CH-2034 Peseux (CH)**
- **DE COULON, Yves**
  **CH-2075 Wavre (CH)**
- **LEMOINE, Cyrille**
  **F-78500 Sartrouville (FR)**

(74) Mandataire: **Vidon Brevets & Stratégie**
**16B, rue de Jouanet**
**B.P. 90333**
**Technopole Atalante**
**35703 Rennes Cedex 7 (FR)**

(56) Documents cités:
**EP-A1- 0 586 982** **WO-A1-2006/031290**
**FR-A1- 2 947 634** **US-A1- 2001 042 693**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 737 308 B1

## Description

### 1. Domaine de l'invention

Le domaine de l'invention est celui des techniques de mesure de propriétés physicochimiques de fluides, notamment des eaux comme par exemple les eaux potables circulant dans des réseaux de distribution.
Plus précisément, l'invention concerne la conception et la fabrication de sondes et les procédés de mesure en ligne de paramètres représentatifs de la qualité de l'eau, en particulier sa concentration en chlore.

### 2. Art antérieur et ses inconvénients

Le chlore est habituellement présent dans l'eau potable sous deux formes :

- la forme acide hypochloreux (HOCl) également dénommée chlore actif ;
- la forme ions hypochlorites (OCl-).

Ces deux formes du chlore coexistent dans l'eau dans des proportions qui dépendent de son pH selon la formule d'équilibre de dissociation suivante :

$$HOCl \rightleftarrows OCl^- + H^+$$

La somme des concentrations d'une eau en chlore actif d'une part et en ions hypochlorites d'autre part constitue la concentration de cette eau en chlore libre :

$$[\text{Chlore libre}] = [HOCl] + [OCl^-]$$

Le chlore est injecté dans l'eau potable de manière à en assurer la désinfection. La concentration résiduelle en chlore libre d'une eau potable aux points de distribution chez le consommateur doit donc être suffisamment importante pour garantir qu'il n'y soit observé aucun développement bactérien. Elle doit toutefois être suffisamment faible pour ne pas en affecter les qualités gustatives.
La concentration en chlore libre d'une eau est donc un paramètre primordial dans l'évaluation de sa qualité.
Dans le domaine du traitement de l'eau, la qualité d'une eau traitée est couramment contrôlée afin de vérifier l'efficacité de son traitement et/ou de l'optimiser en fonction des conditions d'exploitations. Des sondes sont généralement mises en oeuvre à cet effet.
On connaît des sondes ampérométriques qui permettent de mesurer la concentration en chlore sous forme d'acide hypochloreux d'une eau. Ces sondes comprennent par exemple une électrode de référence, une électrode de travail et une contre électrode. L'application d'une différence de potentiel électrique aux bornes des électrodes de référence et de travail permet de réduire l'acide hypochloreux et de produire un courant électrique qui peut être mesuré aux bornes de l'électrode de travail et de la contre électrode. Ce courant est proportionnel à la concentration en acide hypochloreux de l'eau.
Comme cela a été expliqué précédemment, les concentrations en chlore sous forme d'acide hypochloreux et sous forme d'ions hypochlorites sont liées par la réaction suivante :

$$HOCl \rightleftarrows OCl^- + H^+$$

En outre, le pH d'une eau est lié à sa concentration en ions $H^+$ par la formule :

$$pH=-\log([H^+]).$$

Le couplage d'un capteur ampérométrique de chlore sous forme d'acide hypochloreux à un capteur de pH conduit donc à procurer un dispositif de mesure qui permet de connaître la concentration d'une eau en ions hypochlorites et d'en déduire sa concentration en chlore libre, qui pour mémoire est égale à la somme de sa concentration en HOCl et de celle en $OCl^-$.

Un tel dispositif de mesure est avantageux dans la mesure où il permet de déterminer de manière efficace la concentration en chlore libre d'une eau qui constitue un paramètre réglementaire de la qualité d'eau potable distribuée.

Il présente toutefois l'inconvénient de nécessiter la mise en oeuvre d'une sonde de pH. Ce type de sonde requiert de procéder à des opérations de maintenance à une fréquence inférieure à un mois pour bénéficier d'une précision nécessaire au calcul du chlore libre (0,01 unité pH dans la gamme allant de 6,5 à 9 unités pH), ce qui tend à augmenter le coût de cette technique. La mise en oeuvre d'une sonde pH tend en outre à réduire la compacité d'un tel dispositif de mesure.

Le document US2005/0029103 décrit une autre technique de mesure de la concentration en chlore libre d'une eau au moyen d'une sonde comprenant une cavité logeant une électrode de travail et une électrode de référence qui baignent dans une électrolyte contenant un stabilisateur de pH. La cavité est refermée par une membrane hydrophile perméable aux deux formes de chlore constituant le chlore libre. Les ions hypochlorites pénétrant la cavité de la sonde y réagissent pour former de l'acide hypochloreux. L'application d'une différence de potentiel électrique aux bornes des électrodes de travail et de référence permet de réduire l'acide hypochloreux et de générer un courant électrique qui est proportionnel à la concentration en acide hypochloreux. La connaissance de la concentration en acide hypochloreux et du pH dans la cavité permet de connaître la concentration de l'eau en chlore libre.

Cette technique présente l'avantage de ne pas nécessiter la mise en oeuvre d'une sonde de pH.

Elle présente toutefois l'inconvénient de mettre en oeuvre un électrolyte.

Les propriétés d'un tel électrolyte ont tendance à se modifier au cours du temps. Il est donc nécessaire de procédé régulièrement à des campagnes de maintenance pour maintenir en état de fonctionnement un tel dispositif de mesure. La durée de vie d'un tel dispositif, c'est-à-dire la durée qui s'écoule entre sa première mise en service et sa première opération de maintenance est ainsi largement inférieure un an.

En outre, l'électrolyte ne doit pas être mélangé avec l'eau traitée sur laquelle des mesures sont pratiquées. Pourtant, une partie de l'électrolyte de ce type de dispositif peut toutefois fuir dans l'eau à analyser avec laquelle il est mis en contact. Il doit donc être prévu un circuit de dérivation permettant de dévier en direction du dispositif de mesure une partie de l'eau traitée circulant dans le réseau de distribution, l'eau traitée déviée n'étant pas réintroduite dans le réseau de distribution après que la mesure a été effectuée.

Cette technique engendre donc des coûts supplémentaires liés d'une part à la mise en oeuvre de tels moyens de dérivation et d'autre part aux pertes en eaux traitées occasionnées.

Il n'existe donc pas de technique qui permette de mesurer en ligne la concentration en chlore libre d'une eau, c'est-à-dire directement dans le réseau de distribution, et de manière simple et efficace.

Pourtant, il peut arriver que la qualité de l'eau potable se dégrade entre son point de production et son point de distribution chez l'usager. Ceci peut par exemple résulter d'une rupture de canalisation, de retours d'eau voire d'intrusions volontaires de contaminants dans le réseau de distribution par des tiers.

Certains usagers expriment de ce fait le besoin de pouvoir vérifier directement au point de distribution d'eau potable chez eux la qualité de l'eau qui leur est distribuée.

Les techniques de l'art antérieur ne permettent pas de satisfaire un tel besoin.

## 3. Objectifs de l'invention

L'invention a notamment pour objectif de pallier ces inconvénients de l'art antérieur.

Plus précisément, un objectif de l'invention est de fournir, dans au moins un mode de réalisation, une technique qui permette de mesurer en ligne la concentration en chlore libre d'une eau, c'est-à-dire directement dans le réseau de distribution d'eau, par exemple avec un dispositif de mesure en contact avec cette eau.

Un autre objectif de l'invention est de proposer, dans au moins un mode de réalisation de l'invention, une telle technique qui puisse être mise en oeuvre pendant une période relativement longue sans qu'il soit nécessaire de procéder à des campagnes de maintenance.

En particulier, un objectif de l'invention est de mettre en oeuvre, dans au moins un mode de réalisation, une telle technique dont la fréquence des campagnes de maintenance soit supérieure à un an.

L'invention a encore pour objectif de procurer, dans au moins un mode de réalisation de l'invention, une telle technique qui puisse être mise en oeuvre dans un encombrement réduit.

L'invention vise encore à procurer, dans au moins un mode de réalisation, une telle technique qui puisse être mise en oeuvre sous pression.

Un autre objectif de l'invention, dans au moins un mode de réalisation, est de proposer une telle technique, qui soit fiable, simple et relativement économique à mettre en oeuvre.

## 4. Exposé de l'invention

Ces objectifs, ainsi que d'autres qui apparaîtront par la suite, sont atteints à l'aide d'un dispositif pour la mesure

de la teneur en chlore libre d'une eau, ledit dispositif comprenant au moins un capteur ampérométrique de chlore actif comprenant une électrode de référence, une contre électrode, une première et une deuxième électrodes de travail, lesdites électrode de référence et première électrode de travail étant susceptibles d'être reliées à des moyens de génération d'une différence de potentiel électrique, lesdites contre électrode et première électrode de travail étant susceptibles d'être reliées à des moyens de mesure de courant, lesdites contre électrode et deuxième électrode de travail étant susceptibles d'être reliées à des moyens de génération d'un courant électrique, ledit dispositif comprenant une membrane recouvrant lesdites première et deuxième électrodes de travail, ladite membrane étant en contact avec lesdites électrodes de travail et comprenant un gel susceptible de laisser passer l'acide hypochloreux (HOCl) et les ions hypochlorites ($OCl^-$).

Ainsi, l'invention repose sur une approche tout à fait innovante qui consiste à fournir un capteur ampérométrique de chlore actif qui comprend deux électrodes de travail recouvertes d'une membrane en gel perméable à l'acide hypochloreux (HOCl) et aux ions hypochlorites ($OCl^-$). L'acide hypochloreux et les ions hypochlorites peuvent donc diffuser dans la membrane afin d'atteindre l'équilibre de concentration entre l'extérieure de la membrane et l'intérieur. En d'autres termes, la concentration en acide hypochloreux et en ions hypochlorites dans la membrane est identique à celle de l'eau au contact de la membrane.

La mise en contact du capteur avec l'eau dont on souhaite mesurer la concentration en chlore libre s'accompagne d'une diffusion de l'eau et donc de l'acide hypochloreux et des ions hypochlorites qu'elle contient dans la membrane. La composition de l'eau à l'intérieur de la membrane n'est pas perturbée par le flux d'eau circulant dans la canalisation à la surface de la membrane. La membrane constitue donc une couche de diffusion stable pour l'HOCl et les ions hypochlorites.

Compte tenu que les électrodes de travail sont en contact direct avec la membrane, l'application d'un courant électrique aux bornes d'une électrode de travail et de la contre électrode du capteur permet de générer la production de protons $H^+$ dans la membrane par oxydation de l'eau selon la formule $H_2O \rightarrow 2O_2 + 4H^+ + 4e^-$, et d'y réduire le pH.

En maintenant l'intensité du courant généré constante, la production de protons produite sera constante quelle que soit la qualité de l'eau. Pour cela, la tension aux bornes de cette électrode de travail et de l'électrode de référence pourra par exemple être modifiée de manière telle que l'intensité du courant aux bornes de cette électrode de travail et de la contre électrode soit constante quelle que soit la conductivité de l'eau.

Sous l'effet de la production de protons, les ions hypochlorites présents dans la membrane se transforment en acide hypochloreux selon la réaction suivante :

$$HOCl \rightleftarrows OCl^- + H^+ .$$

Le fait de réduire le pH dans la membrane permet donc de décaler l'équilibre HOCl / $OCl^-$ dans une zone dans laquelle le chlore actif prédomine et sa concentration est essentiellement identique à la concentration en chlore libre, comme cela est illustré sur la figure 1.

La génération d'une différence de potentiel électrique, c'est-à-dire d'une tension électrique, aux bornes de l'autre électrode de travail et de l'électrode de référence permet de réduire le chlore actif présent dans la membrane et de générer un courant électrique proportionnel à sa concentration dans l'eau selon l'équation : $HOCl + H^+ + 2e^- \rightarrow Cl^- + H_2O$. Le courant électrique généré peut être mesuré aux bornes de cette autre électrode de travail et de la contre électrode.

Compte tenu de la couche de diffusion stable créée par la membrane, le courant électrique mesuré est stationnaire et proportionnel à la concentration en HOCl de l'eau présente dans la membrane.

Quelle que soit la forme des électrodes, une régression linéaire peut être déterminée lors d'une étape d'étalonnage pouvant être réalisée en usine lors de la fabrication du capteur. Cette étape d'étalonnage consiste à plonger le capteur dans deux solutions ou plus, dont le pH et la concentration en chlore libre ou en chlore actif sont connus et différents. Le courant mesuré par le capteur est proportionnel à la concentration en chlore actif des solutions dans lesquelles le capteur est plongé. Dans le cas où les concentrations en chlore actif des solutions sont connues, il est possible d'associer pour chaque solution une concentration en chlore actif à une intensité de courant généré. Dans le cas où les concentrations en chlore libre sont connues, il est possible de déterminer pour chaque solution la concentration en chlore actif par exemple selon la formule suivante :

$$[\text{Chlore libre}] = [\text{Chlore actif}]\ (1 + 10\text{^}(-\log([H^+]+C.i)-pKa))$$

où :

i est l'intensité du courant généré mesuré
C est une constante liée à la forme des électrodes

Cette étape d'étalonnage ou de calibration permet d'obtenir une droite de régression liant la concentration en chlore actif à l'intensité du courant généré. Il est alors possible de calculer le chlore actif correspondant à un courant donné à partir de cette droite.
Dans le cadre des électrodes de forme circulaire, la théorie permet directement de calculer la constante C selon la formule C=1/(4nFDr) où

n : Nombre d'électrons de la réaction d'oxydoréduction (n sera préférentiellement égal à 2)
F : constante de Faraday
D : Coefficient de diffusion déterminé en laboratoire pour le type de membrane choisie (compris généralement entre $10^{-5}$ et $10^{-6}$ $cm^2/s$)
R : Rayon de l'électrode

De façon générale, la valeur de la constante C peut être déterminée lors d'une étape d'étalonnage. Cette étape consiste à plonger le capteur dans une solution dont le pH (pH=-log([H+])), la concentration en chlore libre et le courant i généré sont connus. Dans ce cas précis, la concentration de chlore actif est calculée ou peut être mesurée grâce à un capteur de référence (Méthode DPD et électrode de pH). La valeur des courants mesurés par le capteur ainsi que la formule ci-dessous peut permettre de calculer la constante C qui est la seule inconnue :

$$[\text{Chlore libre}] = [\text{Chlore actif}]\ (1 + 10\text{^}(-\log([H^+]+C.i)-pKa))$$

La concentration en chlore actif mesurée selon l'invention correspond sensiblement à la concentration en chlore libre de l'eau à analyser.
La mise en oeuvre de la technique selon l'invention permet ainsi de connaître par approximation la concentration en chlore libre d'une eau à analyser sans mettre en oeuvre ni d'électrolyte ni de capteur de pH.
La mise en oeuvre de la membrane permet de protéger efficacement les électrodes de travail contre l'encrassement. En outre, un dispositif selon l'invention ne nécessite pas la mise en oeuvre d'un électrolyte consommable. Un dispositif selon l'invention bénéficie de ce fait d'une durée de vie supérieure à un an, c'est-à-dire qu'il peut permettre de mesurer la concentration en chlore libre d'une eau pendant plus d'un an sans qu'il soit nécessaire de procéder à des opérations de maintenance.
Ne mettant pas en oeuvre de moyens de mesure du pH, un dispositif selon l'invention est de plus très compact. La mise en oeuvre de la membrane permet en outre de réaliser la mesure de la concentration en chlore libre sous pression. Un dispositif selon l'invention peut ainsi être installé sur un réseau de distribution d'eau potable, par exemple directement chez un usager. Il est donc possible de vérifier la qualité de l'eau potable jusqu'à son point de distribution.
La technique selon l'invention ne nécessite pas la construction d'un réseau de dérivation d'une partie de l'eau à analyser dans la mesure où elle ne met pas en oeuvre d'électrolyte, c'est-à-dire que le capteur ne contient pas de réactif. On évite ainsi des pertes en eau potable. Ceci contribue à réduire le coût de mise en oeuvre de la mesure du chlore libre d'une eau.
Ladite membrane est préférentiellement en polymère comme par exemple du Poly(2-hydroxyethylmethacrylate), agarose, polyvinyle alcool (PVA)...
Un gel d'un tel polymère présente l'avantage de permettre une diffusion efficace du chlore actif, des ions hypochlorites et des ions $Cl^-$. Il est en d'autres termes perméable au chlore actif, aux ions hypochlorites et aux ions $Cl^-$.
Dans un mode de réalisation préférentiel, un dispositif selon l'invention comprend des moyens de commande pour mettre ou non en oeuvre lesdits moyens de génération d'un courant électrique pendant une certaine durée.
Il est ainsi possible de mesurer la concentration en chlore actif d'une eau sans mettre en oeuvre les moyens de génération d'un courant électrique, c'est-à-dire sans modifier le pH dans la membrane, puis de mesurer par approximation sa concentration en chlore libre en mettant en oeuvre lesdits moyens de génération d'un courant électrique. Il est ensuite possible de calculer la concentration en ions hypochlorites de l'eau et la valeur de son pH.
La valeur du pH peut être déterminée en appliquant la formule suivante :

$$pH=pKa+\log\{([\text{Chlore Libre}]-[\text{Chlore actif}])/[\text{Chlore actif}]\}$$

où le pKa est la constante d'équilibre de dissociation du couple HOCl/OCl- qui est connu et est égale à 7,55 à 25°C.

Dans un autre mode de réalisation avantageux, un dispositif selon l'invention comprend un deuxième capteur ampérométrique de chlore actif.

Selon une première variante d'un tel mode de réalisation, lesdits premier et deuxième capteurs ampérométriques de chlore actif sont identiques. Il s'agit alors de deux capteurs ampérométriques de chlore à quatre électrodes.

Dans ce cas, lorsque les moyens de génération d'un courant électrique reliés à chaque capteur seront mis en oeuvre, ils délivreront des courants d'intensités différentes $i_1$ et $i_2$. Il sera alors possible de déterminer la concentration en chlore libre de l'eau et la valeur de son pH.

La concentration en chlore libre pourra être calculée en appliquant par exemple la formule suivante :

$$[\text{Chlore libre}] = [\text{Chlore actif}]_{1\ \text{ou}\ 2}\ (1 + 10\hat{}(-\log([H^+]+C.i_{1\ \text{ou}\ 2})-pKa))$$

$[\text{Chlore actif}]_1$ et $[\text{Chlore actif}]_2$ sont déterminées par la mesure du courant généré lors de la réduction de l'espèce HOCl et de l'application d'un courant d'intensité respectivement $i_1$ ou $i_2$ entre la contre électrode et l'une des électrodes de travail d'un capteur ampérométrique.

$[H^+]$ est la concentration de proton présente dans l'eau.

Le pH de l'eau peut être calculé en appliquant par exemple les équations suivantes où l'unique inconnue est la concentration en proton $[H^+]$:

$$[\text{Chlore Actif}]_2/[\text{Chlore Actif}]_1 = (1+10\hat{}(-\log([H^+]+C.i_1)-pKa))/(1+10\hat{}(-\log([H^+]+C.i_2)-pKa))$$

et

$$pH=-\log([H^+])$$

où : le pKa est la constante d'équilibre de dissociation du couple HOCl/OCl- qui est connu et est égale à 7,55 à 25°C ;
$[H^+]$ : est la concentration de proton présente dans l'eau ;
C est une constante connue qui dépend de la géométrie des électrodes.
$[\text{Chlore Actif}]_2$ et $[\text{Chlore Actif}]_1$ sont les deux valeurs de concentration en acide hypochloreux mesurées dans la membrane par les deux capteurs.

Selon une deuxième variante d'un tel mode de réalisation, le deuxième capteur ampérométrique de chlore actif comprend une électrode de référence, une contre électrode, et une unique électrode de travail, lesdites électrode de référence et électrode de travail étant susceptibles d'être reliées à des deuxièmes moyens de génération d'une différence de potentiel électrique, lesdites électrode de travail et contre électrode étant susceptibles d'être reliées à des deuxièmes moyens de mesure de courant.

Il sera alors possible de déterminer simultanément la concentration en chlore libre de l'eau au moyen du capteur ampérométrique à quatre électrodes et la concentration en chlore actif de l'eau au moyen du capteur ampérométrique à trois électrodes. Il pourra en être déduit la concentration de l'eau en ions hypochlorites et la valeur de son pH.

Un dispositif selon l'invention pourra comprendre des moyens de contrôle de la valeur de l'intensité du courant électrique délivré par lesdits moyens de génération d'un courant électrique.

Les propriétés de résistivité et de conductivité d'une eau peuvent varier. Ces propriétés influent sur la différence de potentiel devant être appliquée entre la deuxième électrode de travail et l'électrode de référence pour que l'intensité du courant circulant entre la deuxième électrode de travail et la contre électrode soit constante et que la production de protons à la deuxième électrode de travail soit constante. En effet, plus la résistivité de l'eau est importante, c'est-à-dire que sa conductivité est faible, plus la différence de potentiel devant être appliquée, entre la deuxième électrode de travail et l'électrode de référence devra être importante. La mise en oeuvre de tels moyens de contrôle permettra par conséquent de s'assurer que la quantité de protons délivrés à la deuxième électrode de travail est constante et qu'il en est de même pour la variation de pH.

Lesdites électrodes de travail pourront avantageusement présenter la forme de disques.

De telles électrodes présentent l'avantage d'être moins coûteuses à fabriquer. Leur mise en oeuvre permet donc de produire un dispositif de mesure à un prix plus compétitif.

Elles pourront également avantageusement présenter la forme de peignes. Cette géométrie autorise une production de protons plus importante et est particulièrement adaptée à des eaux dont le pH est plus élevé (> 8 unité pH) et où il est nécessaire d'appliqué une diminution de pH relative plus importante.

**5. Liste des figures**

D'autres caractéristiques et avantages de l'invention apparaîtront plus clairement à la lecture de la description suivante de modes de réalisation préférentiels, donnés à titre de simples exemples illustratifs et non limitatifs, et des dessins annexés, parmi lesquels :

- la figure 1 illustre les courbes d'équilibre du chlore sous forme d'acide hypochloreux et d'ions hypochlorites en fonction du pH ;
- la figure 2 illustre une puce d'un dispositif selon l'invention montée sur un circuit imprimé;
- la figure 3 illustre une variante de la puce représentée sur la figure 2;
- la figure 4 illustre la variation en fonction du temps de l'intensité du courant mesuré au moyen d'un dispositif selon l'invention ;
- la figure 5 illustre une variante de la puce illustrée à la figure 2.

**6. Description d'un mode de réalisation de l'invention**

**6.1. Rappel du principe de l'invention**

Le principe général de l'invention repose sur la mise en oeuvre d'un capteur ampérométrique de chlore actif comprenant deux électrodes de travail recouvertes d'une membrane susceptible de laisser passer l'HOCl et les $OCl^-$ pour déterminer la concentration d'une eau en chlore libre en modifiant le pH à l'intérieur de la membrane par génération de protons.

**6.2. Exemple d'un dispositif de mesure selon l'invention**

**6.2.1. Architecture**

On présente, en relation avec la figure 2, un mode de réalisation d'un dispositif de mesure de la concentration en chlore libre d'une eau.

Ainsi que cela est représenté sur cette figure 2, un tel dispositif comprend un circuit imprimé 10.

Une électrode de référence 11 est montée sur le circuit imprimé 10. Dans ce mode de réalisation, cette électrode de référence 11 est une pseudo électrode de référence en Ag/AgCl.

Une contre électrode 12 est montée sur le circuit imprimé 10. Dans ce mode de réalisation, cette contre électrode 12 comprend deux demi-électrodes 121 reliées entre elles au moyen d'une piste conductrice 122 ménagée sur le circuit imprimé 10. La contre électrode 12 est réalisée en plaquette d'acier inoxydable.

Le dispositif de mesure comprend une puce 13 de forme essentiellement quadrangulaire. Cette puce 13 est réalisée en silicium. Elle comprend une première électrode de travail 131 et une deuxième électrode de travail 132.

La première électrode de travail 131 comprend deux pads de connexion 14. Elle présente la forme d'un anneau.

La deuxième électrode de travail 132 comprend trois pads de connexion 15. Elle présente la forme d'un disque traversé par un évidemment. Les dimensions de cet évidemment sont telles qu'il peut loger l'anneau de la première électrode de travail 131 sans que les première 131 et deuxième 132 électrodes de travail ne soient en contact l'une avec l'autre. Les première et deuxième électrodes de travail 131, 132 sont réalisées en platine. Il ne s'agit pas de microélectrodes.

La puce 13 présente un anneau polymérique 18 destiné à faciliter son encapsulation sur le circuit imprimé 10. Cet anneau est réalisé en PX (Polysiloxane).

Les première et deuxième électrodes de travail 131, 132 sont recouvertes d'une membrane 17. La membrane 17 est réalisée en gel. Il s'agit d'une membrane polyHEMA. Elle est réalisée en polymère Poly(2-hydroxyethylmethacrylate). Cette membrane est hydrophile, c'est-à-dire qu'elle peut s'imprégner d'eau. Elle peut laisser passer les ions hypochlorites et l'acide hypochloreux. En d'autres termes, les ions hypochlorites et l'acide hypochloreux peuvent diffuser à l'intérieur de la membrane et se mettre à la concentration d'équilibre avec le milieu dans lequel on effectue la mesure. Il s'agit donc d'une membrane partiellement sélective. Dans ce mode de réalisation, la membrane est aussi perméable aux ions $Cl^-$.

La membrane 17 est reliée aux électrodes de travail 131, 132 par des liaisons covalentes. Elle présente une épaisseur préférentiellement comprise entre 40 et 150 micromètres.

Le reste de la puce 13 est recouvert d'un isolant qui dans ce mode de réalisation est constitué par du nitrure

de silicium.

Le circuit imprimé 10 comprend des pads de connexion 16 qui sont reliés par des fils aux pads de connexion 14, 15 de la puce 13.

Plus le nombre de pads sera important, meilleure sera la fiabilité de la connexion entre la puce et le circuit imprimé.

Le dispositif de mesure comprend des moyens de génération d'une différence de potentiel électrique (non représentés). Ces moyens de génération d'une différence de potentiel électrique comprennent un générateur de tension électrique permettent d'appliquer une tension électrique constante entre les bornes de l'électrode de référence 11 et de la première électrode de travail 131 via les pads de connexion. Dans ce mode de réalisation, le générateur de tension est relié à l'électrode de référence 11 et à la première électrode de travail 131.

Le dispositif de mesure comprend des moyens de génération d'un courant électrique (non représentés). Ces moyens de génération d'un courant électrique comprennent un générateur de courant et permettent d'appliquer un courant électrique entre les bornes de la contre électrode 12 et de la deuxième électrode de travail 132 via les pads de connexion. Dans ce mode de réalisation, l'application d'un courant d'intensité constante entre la contre électrode 12 et la deuxième électrode de travail 132 est obtenue par la mise en oeuvre d'un générateur de tension variable aux bornes de l'électrode de référence 11 et de la deuxième électrode de travail 132.

Le dispositif de mesure comprend en outre des moyens de contrôle de la valeur de l'intensité du courant électrique délivré par les moyens de génération d'un courant électrique. Dans ce mode de réalisation, ces moyens de contrôle modifient automatiquement la valeur de la tension électrique appliquée par les moyens de génération de courant en fonction de la résistivité ou de la conductivité de l'eau dont la concentration en chlore libre est mesurée de manière telle que l'intensité du courant électrique délivré par les moyens de génération de courant soit constante et que la génération de protons à la deuxième électrode de travail soit constante.

Dans ce mode de réalisation, les moyens de génération d'une différence de potentiel électrique et les moyens de génération de courant électrique constituent un circuit d'alimentation et de polarisation commun, également appelé bi-potentiostat. Un tel bi-potentiostat permet de délivrer une tension constante entre la première électrode de travail et l'électrode de référence et un courant constant entre la deuxième électrode de travail et la contre électrode. Sa mise en oeuvre permet de n'utiliser qu'une seule contre électrode et une seule électrode de référence. Dans une variante, les moyens de génération d'une différence de potentiel et les moyens de génération d'un courant électrique pourront être indépendants les uns des autres. Ils pourront par exemple être chacun constitué d'un potentiostat.

Un potentiostat peut être mis en oeuvre selon différents modes opératoires. La sélection d'un mode ampérométrique induit l'application d'une différence de potentiel fixe (entre électrode de travail et électrode de référence) et la mesure du courant (entre électrode de travail et contre électrode). La sélection d'un mode potentiométrique induit l'application d'un courant fixe (entre électrode de travail et contre électrode) et la mesure de la différence de potentiel (entre électrode de travail et électrode de référence). Dans ce mode de réalisation, le bipotentiostat utilisé est de la marque Palm instruments BV, référence : Palmsens avec bipotentiostat. D'autres types de potentiostat peuvent être utilisés dans des variantes.

Le dispositif de mesure comprend des moyens de mesure de courant (non représentés) entre les bornes de la contre électrode 12 et de la première électrode de travail 131 via les pads de connexion. Ces moyens de mesure peuvent par exemple comprendre un voltmètre ou un ampèremètre. Ils sont reliés à des moyens d'analyse qui permettent de déterminer la concentration en chlore actif à partir de la valeur du courant mesuré via les moyens de mesure. Ces moyens d'analyse peuvent par exemple comprendre un ou plusieurs calculateurs comme des processeurs.

Les moyens de génération d'une différence de potentiel, les moyens de génération d'un courant électrique, les moyens de mesure de courant, les moyens d'analyse et la puce 13, qui comprend la première 131 et la deuxième 132 électrodes de travail, l'électrode de référence 11, la contre électrode 12, et la membrane 17, constituent un premier capteur ampérométrique de chlore actif à quatre électrodes pouvant être mis en oeuvre pour mesurer par équivalence la concentration en chlore libre d'une eau.

Dans ce mode de réalisation, le diamètre sur la puce de la première électrode de travail est préférentiellement compris entre 1900 et 2600 micromètres, le diamètre sur la puce de la deuxième électrode de travail est préférentiellement égal à 4200 micromètres, la différence entre le diamètre extérieur et le diamètre intérieur de l'anneau polymérique est préférentiellement égale à 500 micromètres, la structure de la puce présente préférentiellement une longueur et une largeur respectivement égales à 8 et 6 millimètres, le diamètre de l'isolation est préférentiellement égal à 3100 micromètres.

### 6.2.2. Variantes

La figure 3 illustre une variante d'une puce 30 d'un dispositif de mesure selon l'invention. Comme cela est représenté sur cette figure 3, une telle puce 30 présente une forme essentiellement quadrangulaire. Elle comprend des première 31 et des deuxième 32 électrodes de travail qui sont chacune constituées d'une pluralité de filaments ou

peignes 311, 321 disposés parallèlement les uns aux autres. Ces électrodes de travail 31, 32 comprennent des pads de connexion 312, 322 au circuit imprimé 10. Les zones situées entre les peignes sont constituées de platine recouvert de nitrure de silicium. Les électrodes sous forme de peignes pourront être des microélectrodes ayant une dimension inférieure à 100 micromètres. Dans cette variante, la première électrode de travail mesure préférentiellement 100 micromètres par 3400 micromètres, la deuxième électrode de travail mesure préférentiellement 160 micromètres par 3600 micromètres, la différence entre le diamètre extérieur et le diamètre intérieur de l'anneau polymérique est préférentiellement égale à 500 micromètres, la structure de la puce présente préférentiellement une longueur et une largeur respectivement égales à 8 et 6 millimètres, le diamètre de l'isolation est préférentiellement égal à 110 micromètres.

La figure 5 illustre une autre variante d'une puce 50 selon l'invention. Comme cela est représenté sur cette figure 5, une telle puce 50 présente une forme essentiellement quadrangulaire. Elle comprend une première électrode de travail 51 qui comprend une pluralité de portions d'électrode sous la forme de disques 511 agencés au centre de la puce de manière circulaire. Elle comprend une deuxième électrode de travail 52 agencée de manière semi-circulaire autour de la première électrode de travail 51. Ces électrodes de travail 51, 52 comprennent des pads de connexion 521, 522, 512, 513 au circuit imprimé 10. Dans cette variante, la première électrode de travail a préférentiellement un diamètre sur la puce égal à 600 micromètres, la deuxième électrode de travail a préférentiellement un diamètre sur la puce égal à 4200 micromètres, la différence entre le diamètre extérieur et le diamètre intérieur de l'anneau polymérique est préférentiellement égale à 500 micromètres, la structure de la puce présente préférentiellement une longueur et une largeur respectivement égales à 8 et 6 millimètres, le diamètre de l'isolation est préférentiellement égal à 900 micromètres.

Dans des variantes, les électrodes de référence 11 et contre électrode 12 pourront être directement intégrées à la puce 13, 30.

Le dispositif de mesure peut en outre comprendre des moyens de commandes des moyens de génération de courant électrique. Ces moyens de commandes permettent de mettre en oeuvre ou non les moyens de génération de courant pendant un certain temps. Dans une alternative, ils peuvent permettre aux moyens de génération de courant de générer un premier courant d'intensité constante par l'application d'une première différence de potentiel électrique pendant une certaine durée, puis un deuxième courant d'intensité constante différente par l'application d'une deuxième différence de potentiel électrique pendant une autre durée.

Dans une autre variante, le dispositif selon l'invention pourra en outre comprendre un deuxième capteur de chlore actif comprenant une unique électrode de travail, une électrode de référence, une contre électrode, des moyens de génération d'une différence de potentiel électrique aux bornes de l'électrode de travail et de l'électrode de référence et des moyens de mesure de courant aux bornes de l'électrode de travail et de la contre électrode. Il s'agit d'un capteur ampérométrique de chlore actif à trois électrodes.

Dans une autre variante, un dispositif selon l'invention pourra comprendre deux capteurs ampérométriques de chlore actif identiques à quatre électrodes. Les moyens de génération de courant reliés à chacun de ces capteurs permettront de délivrer une tension différente entre l'une des électrodes de travail et l'électrode de référence de chacun de ces capteurs.

Dans ces deux dernières variantes, il ne sera pas nécessaire de mettre en oeuvre de moyens de commande des moyens de génération de courant électrique de chaque capteur de façon à mettre en oeuvre ou non les deuxièmes moyens de génération pendant un certain temps.

### 6.3. Exemple d'un procédé de mesure de la concentration en chlore libre d'une eau

#### 6.3.1. Mesure de la concentration en chlore libre d'une eau

Un procédé de mesure de la concentration en chlore libre d'une eau selon l'invention va à présent être décrit.

Un dispositif de mesure selon l'invention peut être connecté directement sur une canalisation de distribution d'eau potable en vue de mesurer la concentration en chlore libre de l'eau qui s'y écoule.

Le dispositif de mesure est positionné de telle sorte que la membrane soit logée dans la canalisation et viennent au contact de l'eau qui y circule.

Au contact de l'eau, la membrane 17 de la puce 13 se gorge d'eau. La membrane 17 laisse passer les ions hypochlorites et le chlore actif présent dans l'eau.

Les moyens de génération d'un courant électrique sont mis en oeuvre de manière à générer une intensité électrique constante entre la deuxième électrode de travail 132 et la contre électrode 12 par l'application d'une différence de potentiel variable aux bornes de la deuxième électrode de travail 132 et de l'électrode de référence 11. Une génération de protons sous forme d'ions $H^+$ est alors observée à la deuxième électrode de travail 132 par oxydation de l'eau selon l'équation suivante : $H_2O \rightarrow 2O_2 + 4H^+ + 4e^-$. Ces protons diffusent à l'intérieur de la membrane 17. Le pH de l'eau imbibée dans la membrane est réduit en sorte que le chlore présent dans la membrane s'y trouve essentiellement sous la forme de chlore actif. En effet, les ions hypochlorites réagissent avec les ions $H^+$ pour former de l'acide hypochloreux.

Il existe un gradient de concentration en chlore actif à l'intérieur de la membrane, la concentration étant nulle

au contact des électrodes de travail.

Les moyens de génération d'une différence de potentiel électrique sont également mis en oeuvre de manière à appliquer une tension électrique constante aux bornes de la première électrode de travail 131 et de l'électrode de référence 11. Le chlore actif HOCl présent dans la membrane 17 est alors réduit selon l'équation : $HOCl + H^+ + 2e^- \rightarrow Cl^- + H_2O$. La réduction du chlore actif s'accompagne de la génération d'un courant électrique dont la valeur est proportionnelle à la concentration en chlore actif de la membrane 17 et donc de l'eau circulant dans la canalisation d'eau potable.

La mise en oeuvre des moyens de mesure permet de mesurer le courant généré par la réduction du chlore actif aux bornes de la première électrode de travail 131 et de la contre électrode 12.

Les moyens d'analyse permettent alors de déterminer, en fonction du courant mesuré par les moyens de mesure, la concentration en chlore actif à l'intérieur de la membrane. Ceci est réalisé à partir de la droite de régression linéaire liant la concentration en chlore actif à l'intensité du courant généré obtenue lors de d'étalonnage ou de la calibration du capteur.

Compte tenu de la faible valeur de pH dans la membrane, la concentration en chlore libre est sensiblement égale à la concentration en chlore actif de l'eau. La concentration en chlore libre de l'eau est ainsi déterminée par approximation.

**6.3.2. Mesure du pH et de la concentration en chlore libre d'une eau**

Un procédé selon l'invention peut également être mis en oeuvre pour mesurer la concentration en chlore libre d'une eau ainsi que la valeur de son pH.

Dans ce cas, le dispositif de mesure met en oeuvre:

- soit un unique capteur ampérométrique de chlore actif à quatre électrodes et des moyens de commandes des moyens de génération d'un courant électrique ;
- soit un capteur ampérométrique de chlore actif à quatre électrodes et un capteur ampérométrique de chlore actif à trois électrodes ;
- soit deux identiques capteurs ampérométriques de chlore actif à quatre électrodes.

**A. Unique capteur ampérométrique de chlore actif à quatre électrodes et moyens de commandes des moyens de génération d'un courant électrique**

Une première étape consiste à mesurer la concentration en chlore actif dans la membrane sans y modifier le pH.

Pour cela, les moyens de commande sont mis en oeuvre de manière telle qu'aucun courant électrique ne soit généré par les moyens de génération de courant aux bornes de la deuxième électrode de travail 132 et de la contre électrode 12.

Les moyens de génération d'une différence de potentiel électrique sont mis en oeuvre de manière à générer une différence de potentiel électrique aux bornes de la première électrode de travail 131 et de l'électrode de référence 11. Le chlore actif présent dans la membrane est alors réduit, ce qui génère un courant électrique dont la valeur est mesurée par les moyens de mesure aux bornes de la première électrode de travail 131 et de la contre électrode 12.

Les moyens d'analyse déterminent alors la concentration en chlore actif de l'eau présente dans la membrane comme cela a été décrit précédemment à partir du courant mesuré aux bornes de la première électrode de travail 131 et de la contre électrode 12.

Une deuxième étape consiste à mesurer par approximation la concentration en chlore libre de l'eau présente dans la membrane en y modifiant le pH comme cela a été décrit précédemment. Les moyens de commande sont alors mis en oeuvre de manière à ce que les moyens de génération d'un courant électrique appliquent une tension électrique aux bornes de la deuxième électrode de travail 132 et de l'électrode de référence 11 de manière à générer un courant constant entre la deuxième électrode de travail 132 et la contre électrode 12.

Les moyens d'analyse déterminent par approximation la concentration en chlore libre de l'eau à partir du courant mesuré aux bornes de la première électrode de travail 131 et de la contre électrode 12 comme cela a été expliqué précédemment.

Les moyens d'analyse déterminent ensuite le pH de l'eau circulant dans la canalisation à partir de sa concentration en chlore actif et de sa concentration en chlore libre selon la formule :

$$pH=pKa+\log\{([\text{Chlore Libre}]-[\text{Chlore actif}])/[\text{Chlore Actif}]\}$$

où le pKa est la constante d'équilibre de dissociation du couple HOCl/OCl- qui est connu et est égale à 7,55 à 25°C.

Les moyens d'analyse peuvent également déterminer la concentration en ions hypochlorites de l'eau à partir de sa concentration en chlore libre et de sa concentration en chlore actif

**B. Capteur ampérométrique de chlore actif à quatre électrodes et capteur ampérométrique de chlore actif à trois électrodes**

La concentration en chlore libre de l'eau est déterminée par approximation au moyen du capteur à quatre électrodes comme cela a été expliqué précédemment.

En parallèle, la concentration en chlore actif de l'eau est déterminée par la mise en oeuvre du capteur ampérométrique de chlore actif à trois électrodes. Pour cela, une tension est appliquée par des moyens de génération d'une différence de potentiel électrique aux bornes de l'électrode de travail et de l'électrode de référence du capteur à trois électrodes. Ceci s'accompagne d'une réduction du chlore actif et de la génération d'un courant électrique proportionnel à la concentration de l'eau en chlore actif. Ce courant est mesuré aux bornes de l'électrode de travail et de la contre électrode du capteur à trois électrodes. Les moyens d'analyse déterminent alors la concentration de l'eau en chlore actif à partir de la mesure du courant généré aux bornes de l'électrode de travail et de la contre électrode du capteur à trois électrodes. Dans ce but, le capteur chlore actif à trois électrodes est calibré par rapport à une référence comme cela a été expliqué précédemment en relation avec un capteur à quatre électrodes de façon à obtenir une droite de régression linéaire reliant la concentration en chlore actif à l'intensité du courant généré mesurée.

À partir de la concentration en chlore libre et de la concentration en chlore actif de l'eau, les moyens d'analyse déterminent le pH de l'eau, comme cela a été indiqué précédemment.

À partir de la concentration en chlore libre et de la concentration en chlore actif de l'eau, les moyens d'analyse peuvent également déterminer la concentration en ions hypochlorites de l'eau.

**C. Deux identiques capteurs ampérométriques de chlore à quatre électrodes**

Une première étape consiste à mesurer la concentration en chlore actif de l'eau présente dans la membrane en y modifiant le pH comme cela a été décrit précédemment pour atteindre une première valeur de pH. Les moyens de commande sont alors mis en oeuvre de manière à ce que les moyens de génération de courant électrique appliquent une première tension électrique aux bornes de la deuxième électrode de travail 132 et de l'électrode de référence 11 d'un premier capteur ampérométrique de manière à ce que l'intensité du courant généré entre la deuxième électrode de travail et la contre électrode du premier capteur soit constante.

Les moyens d'analyse déterminent une première concentration en chlore actif de l'eau à partir du premier courant généré mesuré aux bornes de la première électrode de travail 131 et de la contre électrode 12 du premier capteur ampérométrique, comme cela a été expliqué précédemment.

Une deuxième étape consiste à mesurer la concentration en chlore actif de l'eau présente dans la membrane en y modifiant le pH comme cela a été décrit précédemment, pour atteindre une deuxième valeur de pH. Les moyens de commande sont alors mis en oeuvre de manière à ce que les moyens de génération de courant électrique appliquent une deuxième tension aux bornes de la deuxième électrode de travail 132 et de l'électrode de référence 11 du deuxième capteur ampérométrique de manière à ce que l'intensité du courant généré entre la deuxième électrode de travail et la contre électrode du deuxième capteur soit constante.

Les moyens d'analyse déterminent une deuxième concentration en chlore actif de l'eau à partir du deuxième courant mesuré aux bornes de la première électrode de travail 131 et de la contre électrode 12 du deuxième capteur ampérométrique, comme cela a été expliqué précédemment.

Les première et deuxième étapes sont préférentiellement mises en oeuvre de manière concomitante.

Les moyens d'analyse déterminent ensuite le pH de l'eau circulant dans la canalisation en appliquant la formule suivante où l'unique inconnue est la concentration en proton [H+]:

$$[\text{Chlore Actif}]_2/[\text{Chlore Actif}]_1 = (1+10\text{^}(-\log([H^+]+C.i_1)-pKa))/(1+10\text{^}(-\log([H^+]+C.i_2)-pKa))$$

puis la formule suivante :

$$pH=-\log([H^+])$$

[Chlore Actif]$_2$ et [Chlore Actif]$_1$ sont les deux valeurs de concentration en acide hypochloreux mesurées dans la membrane par les deux capteurs.

Les moyens d'analyse peuvent également déterminer la concentration en chlore libre de l'eau selon l'une ou l'autre des formules suivantes :

$$[\text{Chlore libre}] = [\text{Chlore actif}]_2\ (1+10\text{^}(-\log([H^+] + C.i_2)-pKa))$$

Ou:

$$[\text{Chlore libre}] = [\text{Chlore actif}]_1\ (1+10\text{^}(-\log([H^+] + C.i_1)-pKa))$$

Les moyens d'analyse peuvent également déterminer la concentration en chlore actif de l'eau selon la formule suivante :

$$[\text{Chlore actif}] = [\text{Chlore libre}]/(1+10\text{^}(pH-pKa))$$

le pH étant déterminé par la formule précédente.

Dans une variante, la concentration en chlore libre et le pH de l'eau pourraient être déterminés en suivant le même principe et en mettant en oeuvre un unique capteur ampérométrique à quatre électrodes reliés à des moyens de contrôle des deuxièmes moyens de génération agissant sur ceux-ci de façon telle qu'ils délivrent une première tension pendant un certain temps, puis une autre tension.

**6.4. Essais**

Des essais ont été menés pour vérifier l'efficacité d'une technique de mesure de la concentration en chlore libre d'une eau selon l'invention.

Dans un premier temps, un dispositif selon l'invention a été mis au contact d'une eau ne contenant pas de chlore et dont le pH était compris entre 8,2 et 8,4; Une émission de protons était maintenue à la deuxième électrode de travail: L'intensité du courant aux bornes de la première électrode de travail et de l'électrode de référence était alors nulle.

Un nombre identique de gouttes d'une solution d'hypochlorites a été introduites à deux reprises dans l'eau (flèches 1 et 2 sur la figure 4). On observe alors que l'intensité du courant aux bornes de la première électrode de travail et de la contre électrode est proportionnelle à la quantité de solution d'hypochlorites injectée dans l'eau.

La production de protons à la deuxième électrode de travail a ensuite été stoppée (cf. flèche 3 sur la figure 4). Ceci s'est accompagné d'une chute de l'intensité du courant aux bornes de la première électrode de travail et de la contre électrode à une valeur proche de zéro. Ceci traduit le fait que l'arrêt de la génération de protons dans la membrane s'accompagne d'un arrêt de la transformation des ions hypochlorites en acide hypochloreux.

La reprise de la génération de protons (cf. flèche 4 sur la figure 4) s'accompagne de nouveau de la génération d'un courant dont l'intensité mesurée aux bornes de la première électrode de travail et de la contre électrode est proportionnelle à la quantité d'ion hypochlorites présents dans l'eau.

Cet essai montre bien que la génération de protons dans la membrane permet d'y transformer les ions hypochlorites en acide hypochloreux et ainsi de déplacer l'équilibre acide hypochloreux/ions hypochlorites vers une zone dans laquelle la concentration en acide hypochloreux est sensiblement égale à la concentration en chlore libre.

La hauteur des paliers obtenus en réponses aux injections d'une même quantité de solution d'hypochlorites est identique. La mesure du courant généré en réponse à ces injections est donc linéaire.

**6.5. Autres avantages**

La technique selon l'invention permet de mesurer la concentration en chlore libre d'une eau par approximation en abaissant son pH de manière telle que la forme chlore actif du chlore soit prépondérante et que sa concentration soit sensiblement égale à celle du chlore libre.

Elle peut notamment être efficacement mise en oeuvre en abaissant le pH de l'eau à une valeur comprise entre 5,5 et 6,5.

## Revendications

**1.** Dispositif pour la mesure de la teneur en chlore libre d'une eau, ledit dispositif comprenant au moins un capteur ampérométrique de chlore actif comprenant une électrode de référence (11), une contre électrode (12), une première (131) et une deuxième (132) électrodes de travail, lesdites électrode de référence (11) et première électrode de travail (131) étant destinées à être reliées à des moyens de génération d'une différence de potentiel électrique, lesdites contre électrode (12) et première électrode de travail (131) étant destinées à être reliées à des moyens de mesure de courant électrique, lesdites contre électrode (12) et deuxième électrode de travail (132) étant destinées à être reliées à des moyens de génération de courant électrique, ledit dispositif comprenant une membrane (17) recouvrant lesdites première (131) et deuxième (132) électrodes de travail, ladite membrane (17) étant en contact avec lesdites électrodes de travail (131, 132) et comprenant un gel perméable à l'acide hypochloreux (HOCl) et aux ions hypochlorites ($OCl^-$).

**2.** Dispositif selon la revendication 1, **caractérisé en ce qu'**il comprend :

- lesdits moyens de génération d'une différence de potentiel électrique, lesdites électrode de référence (11) et première électrode de travail (131) étant reliées auxdits moyens de génération d'une différence de potentiel électrique ;
- lesdits moyens de mesure de courant électrique, lesdites contre électrode (12) et première électrode de travail (131) étant reliées auxdits moyens de mesure de courant électrique ;
- lesdits moyens de génération de courant électrique, lesdites contre électrode (12) et deuxième électrode de travail (132) étant reliées à des moyens de génération de courant électrique.

**3.** Dispositif selon la revendication 1 ou 2, **caractérisé en ce que** ladite membrane (17) est en polymère.

**4.** Dispositif selon la revendication 3, **caractérisé en ce que** ledit polymère est du Poly(2-hydroxyethylmethacrylate).

**5.** Dispositif selon l'une quelconque des revendications 1 à 4, **caractérisé en ce qu'**il comprend des moyens de commande pour mettre ou non en oeuvre lesdits moyens de génération de courant électrique pendant une certaine durée.

**6.** Dispositif selon l'une quelconque des revendications 1 à 4, **caractérisé en ce qu'**il comprend un deuxième capteur ampérométrique de chlore actif.

**7.** Dispositif selon la revendication 6, **caractérisé en ce que** lesdits premier et deuxième capteurs ampérométriques de chlore actif sont identiques.

**8.** Dispositif selon la revendication 6, **caractérisé en ce que** le deuxième capteur ampérométrique de chlore actif comprend une électrode de référence, une contre électrode, et une unique électrode de travail, lesdites électrode de référence et électrode de travail étant destinées à être reliées à des deuxièmes moyens de génération d'une différence de potentiel électrique, lesdites électrode de travail et contre électrode étant destinées à être reliées à des deuxièmes moyens de mesure de courant.

**9.** Dispositif selon la revendication 8, **caractérisé en ce qu'**il comprend :

- lesdits deuxièmes moyens de génération d'une différence de potentiel électrique, lesdites électrode de référence et électrode de travail étant reliées auxdits deuxièmes moyens de génération d'une différence de potentiel électrique ;
- lesdits deuxièmes moyens de mesure de courant, lesdites électrode de travail et contre électrode étant reliées auxdits deuxièmes moyens de mesure de courant.

**10.** Dispositif selon l'une quelconque des revendications 1 à 9, **caractérisé en ce qu'**il comprend des moyens de contrôle de la valeur de l'intensité du courant électrique délivré par lesdits moyens de génération de courant électrique.

**11.** Dispositif selon l'une quelconque des revendications 1 à 10, **caractérisé en ce que** lesdites électrodes de travail (131, 132) présentent la forme de disques.

**12.** Dispositif selon l'une quelconque des revendication 1 à 10, **caractérisé en ce que** lesdites électrodes de travail (31, 32) présentent la forme de peignes (311, 321).

**13.** Dispositif selon l'une quelconque des revendications 2 à 12, **caractérisé en ce qu'**il comprend des moyens d'analyse, lesdits moyens d'analyse déterminant la concentration en chlore libre en fonction du courant mesuré par lesdits moyens de mesure de courant électrique.

**Patentansprüche**

**1.** Vorrichtung zum Messen des Gehalts eines Wassers an freiem Chlor, wobei die Vorrichtung mindestens einen amperometrischen Sensor für aktives Chlor umfasst, der eine Referenzelektrode (11), eine Gegenelektrode (12), eine erste (131) und eine zweite (132) Arbeitselektrode umfasst, wobei die Referenzelektrode (11) und die erste Arbeitselektrode (131) dafür vorgesehen sind, mit Mitteln zur Erzeugung einer elektrischen Potentialdifferenz verbunden zu werden, die Gegenelektrode (12) und die erste Arbeitselektrode (131) dafür vorgesehen sind, mit Mitteln zum Messen des elektrischen Stroms verbunden zu werden, die Gegenelektrode (12) und die zweite Arbeitselektrode (132) dafür vorgesehen sind, mit Mitteln zur Erzeugung elektrischen Stroms verbunden zu werden, wobei die Vorrichtung eine Membran (17) umfasst, welche die erste (131) und zweite (132) Arbeitselektrode bedeckt, wobei die Membran (17) mit den Arbeitselektroden (131, 132) in Kontakt steht und ein Gel umfasst, das für Hypochlorige Säure (HOCl) und Hypochloritionen ($OCl^-$) durchlässig ist.

**2.** Vorrichtung nach Anspruch 1, **dadurch gekennzeichnet, dass** sie folgendes umfasst:

- die Mittel zur Erzeugung einer elektrischen Potentialdifferenz, wobei die Referenzelektrode (11) und erste Arbeitselektrode (131) mit den Mitteln zur Erzeugung einer elektrischen Potentialdifferenz verbunden sind;
- die Mittel zum Messen des elektrischen Stroms, wobei die Gegenelektrode (12) und erste Arbeitselektrode (131) mit den Mitteln zum Messen des elektrischen Stroms verbunden sind;
- die Mittel zur Erzeugung elektrischen Stroms, wobei die Gegenelektrode (12) und die zweite Arbeitselektrode (132) mit den Mitteln zur Erzeugung elektrischen Stroms verbunden sind.

**3.** Vorrichtung nach Anspruch 1 oder 2, **dadurch gekennzeichnet, dass** die Membran (17) aus einem Polymer besteht.

**4.** Vorrichtung nach Anspruch 3, **dadurch gekennzeichnet, dass** das Polymer Poly(2-hydroxyethylmethacrylat) ist.

**5.** Vorrichtung nach einem der Ansprüche 1 bis 4, **dadurch gekennzeichnet, dass** sie Steuerungsmittel umfasst, um die Mittel zur Erzeugung elektrischen Stroms über einen bestimmten Zeit zu implementieren oder nicht.

**6.** Vorrichtung nach einem der Ansprüche 1 bis 4, **dadurch gekennzeichnet, dass** sie einen zweiten amperometrischen Sensor für aktives Chlor umfasst.

**7.** Vorrichtung nach Anspruch 6, **dadurch gekennzeichnet, dass** der erste und zweite amperometrische Sensor für aktives Chlor identisch sind.

**8.** Vorrichtung nach Anspruch 6, **dadurch gekennzeichnet, dass** der zweite amperometrische Sensor für aktives Chlor eine Referenzelektrode, eine Gegenelektrode und eine einzige Arbeitselektrode umfasst, wobei die Referenzelektrode und die Arbeitselektrode dafür vorgesehen sind, mit zweiten Mitteln zur Erzeugung einer elektrischen Potentialdifferenz verbunden zu werden, wobei die Arbeitselektrode und die Gegenelektrode dafür vorgesehen sind, mit zweiten Mitteln zum Messen des Stroms verbunden zu werden.

**9.** Vorrichtung nach Anspruch 8, **dadurch gekennzeichnet, dass** sie folgendes umfasst:

- die zweiten Mittel zur Erzeugung einer elektrischen Potentialdifferenz, wobei die Referenzelektrode und Arbeitselektrode mit den zweiten Mitteln zur Erzeugung einer elektrischen Potentialdifferenz verbunden sind;
- die zweiten Mittel zum Messen des Stroms, wobei die Arbeitselektrode und die Gegenelektrode mit den zweiten Mitteln zum Messen des Stroms verbunden sind.

**10.** Vorrichtung nach einem der Ansprüche 1 bis 9, **dadurch gekennzeichnet, dass** sie Mittel zur Kontrolle des elektrischen Stromstärkewerts umfasst, der von den Mitteln zur Erzeugung elektrischen Stromstärke geliefert wird.

**11.** Vorrichtung nach einem der Ansprüche 1 bis 10, **dadurch gekennzeichnet, dass** die Arbeitselektroden (131, 132) die Form von Scheiben annehmen.

**12.** Vorrichtung nach einem der Ansprüche 1 bis 10, **dadurch gekennzeichnet, dass** die Arbeitselektroden (31, 32) die Form von Kämmen (311, 321) annehmen.

**13.** Vorrichtung nach einem der Ansprüche 2 bis 12, **dadurch gekennzeichnet, dass** sie Analysemittel umfasst, wobei den Analysemittel die freie Chlorkonzentration als Funktion des gemessenen Stroms durch den Mitteln zum Messen des elektrischen Stroms bestimmt.

## Claims

**1.** Device for measuring the free chlorine content of a water, said device comprising at least one amperometric sensor of active chlorine comprising a reference electrode (11), a counter electrode (12), a first working electrode (131) and a second working electrode (132), said reference electrode (11) and said first working electrode (131) being intended to be connected to means for generating an electric potential difference, said counter electrode (12) and said first working electrode (131) being intended to be connected to means for measuring electric current, said counter electrode (12) and said second working (132) electrode being intended to be connected to means for generating electric current, said device comprising a membrane (17) coating said first (131) and second (132) working electrodes, said membrane (17) being in contact with said working electrodes (131, 132) and comprising a gel permeable to hypochlorous acid (HOCl) and to hypochlorite ions ($OCl^-$).

**2.** Device according to claim 1, **characterized in that** it comprises:

- said means for generating an electric potential difference, said reference electrode (11) and said first working electrode (131) being connected to said means for generating an electric potential difference;
- said means for measuring electric current, said counter electrode (12) and said first working electrode (131) being connected to said means for measuring electric current;
- said means for generating electric current, said counter electrode (12) and said second working (132) electrode being connected to said means for generating electric current.

**3.** Device according to claim 1 or 2, **characterized in that** said membrane (17) is made of polymer.

**4.** Device according to claim 3, **characterized in that** said polymer is Poly(2-hydroxyethylmethacrylate).

**5.** Device according to any one of the claims 1 to 4, **characterized in that** it comprises control means in order to implement or not implement said means for generating an electric current for a certain duration.

**6.** Device according to any one of the claims 1 to 4, **characterized in that** it comprises a second amperometric sensor of active chlorine.

**7.** Device according to claim 6, **characterized in that** said first and second amperometric sensors of active chlorine are identical.

**8.** Device according to claim 6, **characterized in that** the second amperometric sensor of active chlorine comprises a reference electrode, a counter electrode and a single working electrode, said reference electrode and working electrode being intended to be connected to second means for generating an electric potential difference, said working electrode and counter electrode being intended to be connected to second means for measuring current.

**9.** Device according to claim 8, **characterized in that** it comprises;

- said second means for generating an electric potential difference, said reference electrode and working electrode being connected to said second means for generating an electric potential difference;
- said second means for measuring current, said working electrode and counter electrode being connected to said second means for measuring current.

**10.** Device according to any one of the claims 1 to 9, **characterized in that** it comprises means for controlling the value

of the intensity of the electric current delivered by said means for generating an electric current.

11. Device according to any one of the claims 1 to 10, **characterized in that** said working electrodes (131, 132) take the shape of disks.

12. Device according to any one of the claims 1 to 10, **characterized in that** said working electrodes (31, 32) take the form of combs (311, 321).

13. Device according to any one of claims 2 to 12, **characterized in that** it comprises analysis means, said analysis means determining the concentration of free chlorine as a function of the current measured by said means for measuring current.

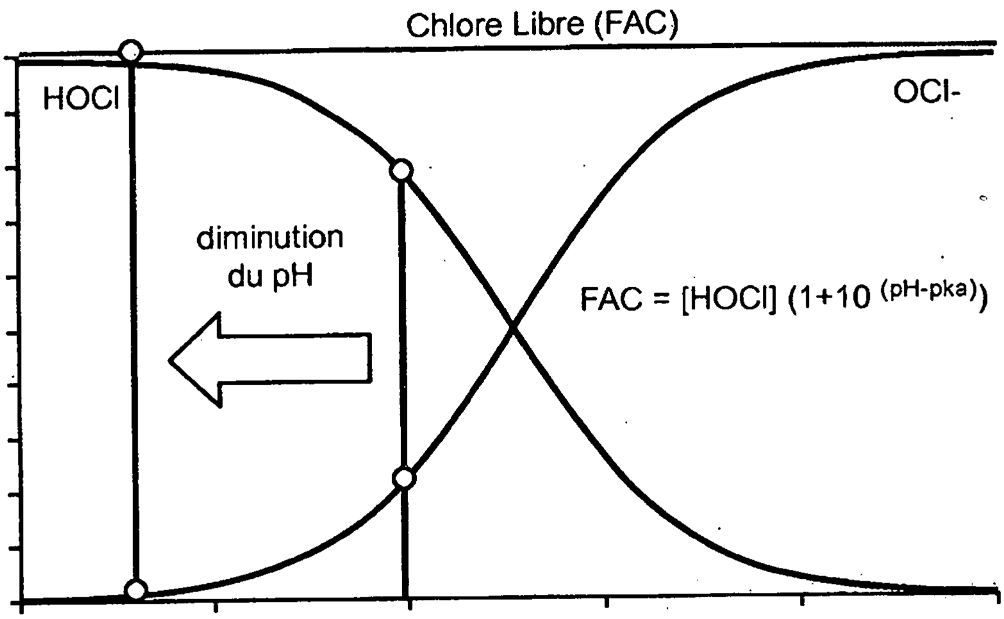
Chlore Libre (FAC)
HOCl
OCl-
diminution
du pH
FAC = [HOCl] (1+10 (pH-pka))

Fig. 1

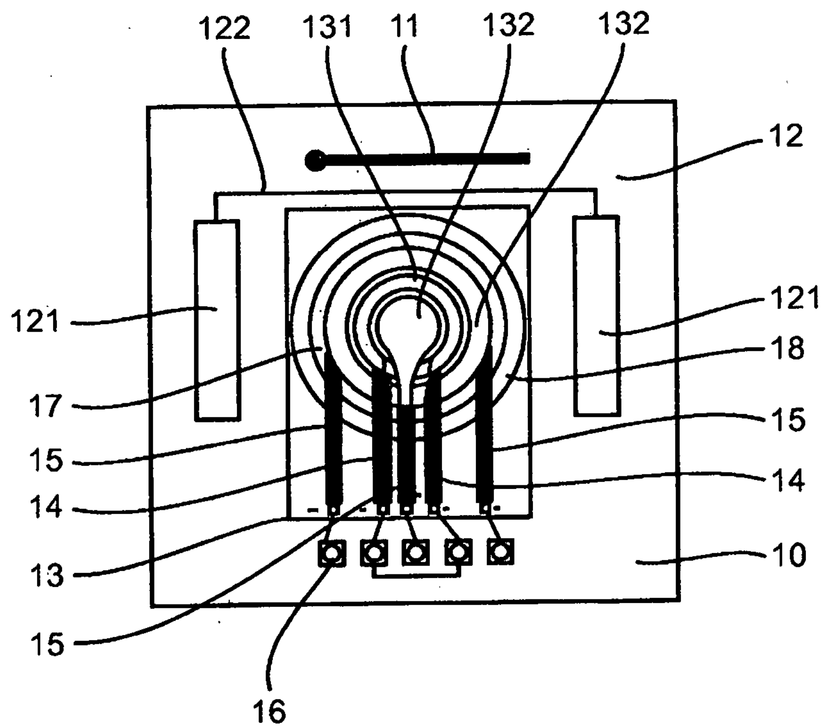
122
131
11
132
132
12
121
121
17
18
15
15
14
14
13
10
15
16

Fig. 2

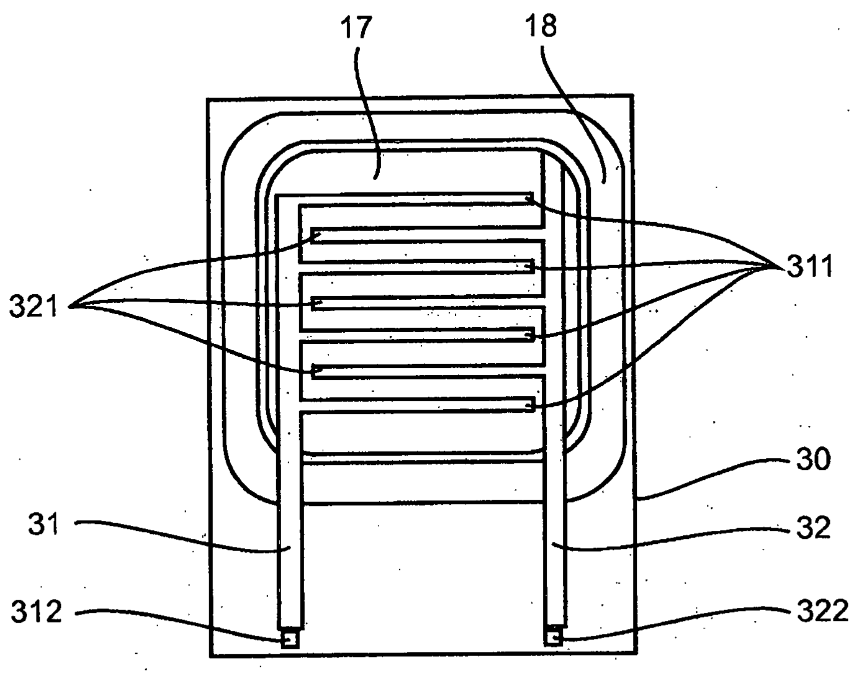


Fig. 3

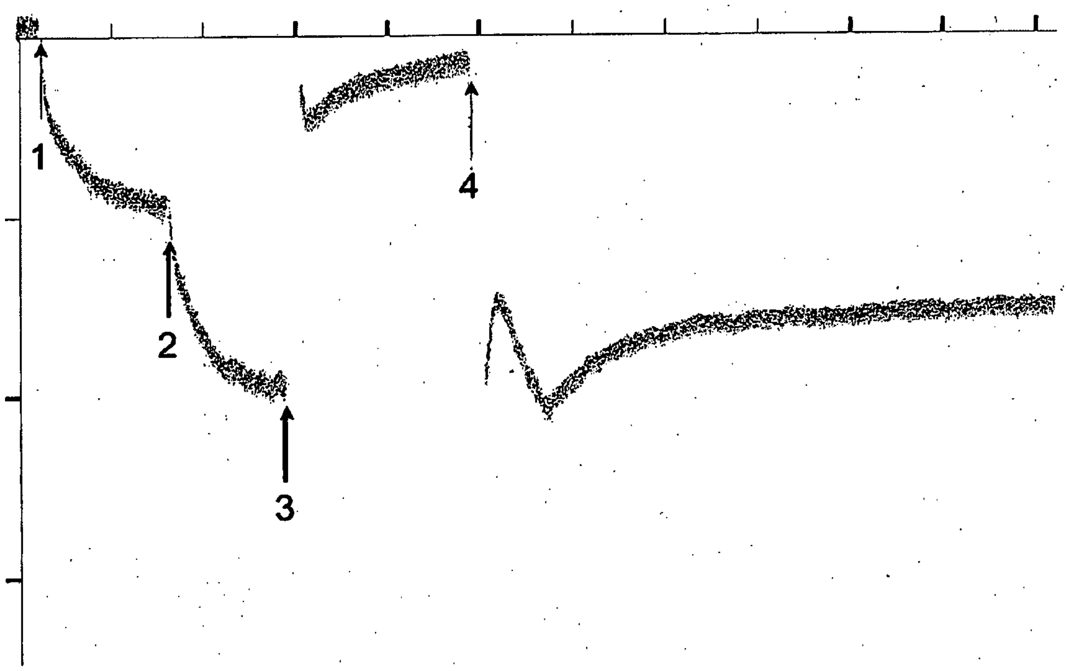


Fig. 4

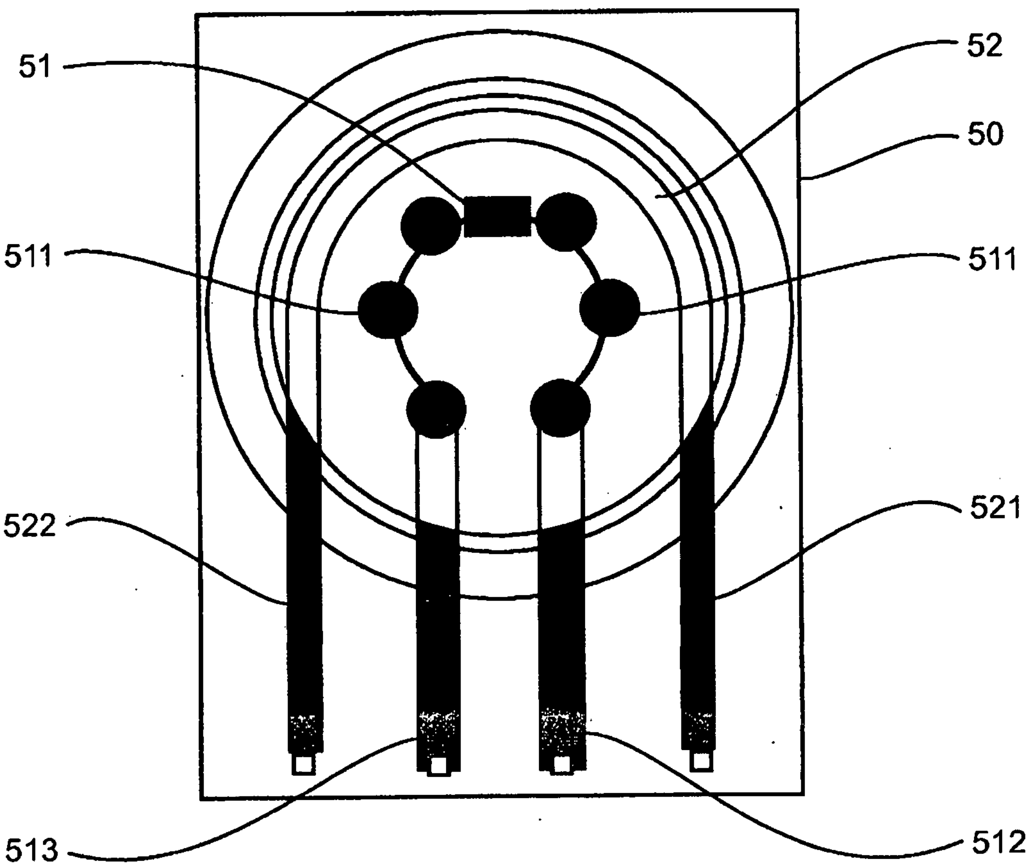


Fig. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 20050029103 A